# FASCICULE DE BREVET EUROPEEN

(11) **EP 2 821 597 B1**
(45) Date de publication et mention de la délivrance du brevet: **10.02.2016**
(21) Numéro de dépôt: 13175411.1
(22) Date de dépôt: 05.07.2013
(51) Int. Cl.: F01D 25/02, F02C 7/047, B64D 33/02

(54) **Bec de séparation avec tôle formant une surface de guidage du flux et un canal de dégivrage**
Trennkante mit Blech zur Bildung einer Fläche zur Strömungsleitung und eines Enteisungskanals
Splitter with a sheet forming a guide surface for the flow and a defrosting channel

(43) Date de publication de la demande: 07.01.2015
(73) Titulaire: Techspace Aero S.A., 4041 Herstal (Milmort) (BE)
(72) Inventeur: Herbaut, Ghislain, 4257 Berloz (BE); Baldewijns, Benoît, 4280 Hannut (BE)
(74) Mandataire: Lecomte & Partners

(56) Documents cités:
- EP-A1- 2 075 194
- GB-A- 2 442 967
- US-B2- 6 561 760

## Description

### Domaine technique

L'invention a trait aux turbomachines axiales double flux. Plus précisément, l'invention a trait à un bec de séparation d'une turbomachine axiale double flux, le bec séparant le flux entrant en un flux primaire et en un flux secondaire. Plus précisément encore, l'invention a trait à un bec de séparation de turbomachine axiale muni d'un système de dégivrage.

### Technique antérieure

Afin d'optimiser leur poussée, les turboréacteurs travaillent avec plusieurs flux d'air annulaires. Un flux primaire traverse un compresseur, une chambre de combustion, puis est détendu dans une turbine. Un flux secondaire contourne par l'extérieur le compresseur, la chambre de combustion, la turbine, et regagne ensuite le flux primaire en sortie du turboréacteur. Les flux sont séparés par un bec de séparation placé en amont du compresseur. La forme du bec permet de couper le flux d'air entrant dans la turbomachine et limite l'entrée dans le compresseur. En étant placé en aval des aubes de la soufflante, il est exposé aux ingestions de corps étrangers.

Un bec de séparation d'une turbomachine axiale comprend généralement une paroi annulaire externe et une virole externe de redresseur. Ces éléments comprennent des surfaces de guidage des flux annulaires depuis le bord d'attaque du bec de séparation. La précision géométrique et le positionnement relatif de ces surfaces de guidage sont garants du respect de la veine aérodynamique telle que définie.

Le positionnement relatif entre les surfaces de guidage dépend de la concentricité entre la paroi annulaire et la virole externe. Pour respecter la concentricité, il est connu de doter la virole externe et la paroi annulaire de moyens de centrage. Les moyens de centrage permettent de centrer sur le compresseur le flux primaire séparé par la paroi annulaire. Ceci favorise une entrée homogène du flux primaire dans le compresseur basse pression et évite la génération de vibrations.

L'air entrant dans la turbomachine reste à température atmosphérique au niveau du bec de séparation. Ces températures peuvent descendre à - 50°C en altitude. En présence d'humidité, de la glace peut se former sur le bec. En cours de vol, cette glace peut s'étendre et s'accumuler jusqu'à former des blocs en tête des aubes statoriques du compresseur.

Ces blocs peuvent modifier la géométrie du bec et influer sur le flux d'air entrant dans le compresseur, ce qui peut en réduire le rendement. A force de se développer, les blocs peuvent devenir particulièrement massifs. Par la suite, ils risquent de se détacher et d'être ingérés par le compresseur, risquant de dégrader au passage les aubes rotoriques et statoriques.

Pour limiter cette formation de glace, les becs de séparation sont munis d'un dispositif de dégivrage.

Le document US 6,561,760 B2 présente un bec de séparation de compresseur d'une turbomachine axiale, le bec étant muni d'un système de dégivrage à l'aide de gaz d'échappement. Le bec est formé d'une paroi externe et d'une virole externe. Cette dernière supporte une rangée annulaire d'aubes de redresseur. Le bec de séparation comprend une fente circulaire dans laquelle s'engage un bord amont de la virole externe. L'interface de la fente est travaillée de sorte à ménager des canaux axiaux dans l'épaisseur des éléments. Ces canaux autorisent une circulation des gaz d'échappement, ce qui a pour effet de réchauffer le bord d'attaque du bec de séparation. Ce dernier est ainsi prémuni contre une formation de glace. Cependant, ce type de bec nécessite des usinages à la fois précis et fins pour réaliser les canaux. Les coûts de fabrication sont donc élevés. De plus, la paroi externe présente un profil massif qui réduit la conduction thermique. Les surfaces extérieures au droit de ces zones massives sont donc moins bien dégivrées. En particulier, le bord d'attaque qui est en contact d'un flux important n'est pas dégivré aussi efficacement que la surface extérieure au droit axialement de la rangée annulaire d'aubes.

### Résumé de l'invention

### Problème technique

L'invention a pour objectif de résoudre au moins un des problèmes soulevés par l'art antérieur. L'invention a également pour objectif d'augmenter l'homogénéité de l'efficacité d'un bec de dégivrage de turbomachine axiale. Plus précisément, l'invention a pour objectif d'augmenter l'efficacité d'un bec de dégivrage au niveau de son bord d'attaque.

### Solution technique

L'invention a pour objet un bec de séparation d'une turbomachine axiale, apte à séparer un flux entrant dans la turbomachine en un flux primaire et en un flux secondaire, et comprenant: un bord d'attaque généralement circulaire; une paroi annulaire s'étendant depuis le bord d'attaque et délimitant le flux secondaire; au moins un canal pour un fluide de dégivrage du bec de séparation, s'étendant essentiellement axialement le long de la paroi de manière à déboucher dans le flux primaire; remarquable en ce que la surface extérieure de la paroi est formée par une tôle délimitant le canal de dégivrage.

Selon un mode avantageux de l'invention, le ou les canaux présentent une épaisseur essentiellement constante sur la majeure partie de son/leur étendue axialement le long de la paroi.

Selon un mode avantageux de l'invention, la tôle est une tôle annulaire ou une pluralité de segments de tôle annulaire, et présente un profil avec une portion aval sensiblement rectiligne et une portion amont coudée qui forme le bord d'attaque.

Selon un mode avantageux de l'invention, la tôle présente une épaisseur inférieure à 1,50 mm; préférentiellement inférieure à 1,00 mm; plus préférentiellement inférieure à 0,50 mm.

Selon un mode avantageux de l'invention, le canal de dégivrage s'étend radialement sur la majorité du profil de révolution de la tôle annulaire.

Selon un mode avantageux de l'invention, la paroi annulaire comprend un support de tôle, dont la surface extérieure présente un ressaut en vis-à-vis d'un bord aval de la tôle, de manière à ce que la surface extérieure de la tôle soit alignée avec celle du support au niveau dudit ressaut.

Selon un mode avantageux de l'invention, la paroi annulaire forme au niveau du bord d'attaque un crochet annulaire, préférentiellement avec une gorge annulaire ouverte axialement vers l'aval.

Selon un mode avantageux de l'invention, le bec comprend une virole externe d'un redresseur à aubes, le bord amont de ladite virole comprenant une surface de centrage annulaire coopérant avec une surface de centrage correspondante de la paroi, de sorte à assurer une concentricité entre ladite paroi et ladite virole.

Selon un mode avantageux de l'invention, la virole externe comprend une gorge annulaire destinée à recevoir une couche annulaire de matériau abradable.

Selon un mode avantageux de l'invention, chacune de la virole externe et de la paroi annulaire comprend, en aval des surfaces de centrage, une bride s'étendant radialement, lesdites brides étant fixées l'une à l'autre et se chevauchant axialement et/ou radialement.

Selon un mode avantageux de l'invention, le bec comprend au moins un conduit d'amenée du fluide de dégivrage, en communication avec le canal de dégivrage et préférentiellement traversant les deux brides annulaires.

Selon un mode avantageux de l'invention, le bec comprend plusieurs canaux de dégivrage qui s'étendent axialement et qui sont répartis le long de la périphérie de la paroi annulaire.

Selon un mode avantageux de l'invention, les canaux de dégivrage sont formés par la tôle et un support de ladite tôle, préférentiellement le support comprenant sur sa surface extérieure des cavités réparties le long de sa circonférence et correspondants aux canaux.

Selon un mode avantageux de l'invention, le bec comprend une chambre de distribution, préférentiellement annulaire, destinée à distribuer le fluide aux canaux de dégivrage, la chambre étant préférentiellement reliée aux canaux par des passages au travers du support.

Selon un mode avantageux de l'invention, le ou chacun des canaux de dégivrage comprend une sortie en forme de fente annulaire, éventuellement segmentée, orientée radialement vers l'intérieur et axialement vers l'aval.

Selon un mode avantageux de l'invention, la paroi annulaire comprend au moins un passage en communication avec le canal de dégivrage et l'intérieur de la paroi annulaire.

Selon un mode avantageux de l'invention, la tôle est une première tôle annulaire, la paroi annulaire comprend une deuxième tôle annulaire qui épouse l'intérieur de la première tôle, le canal de dégivrage étant délimité par la première tôle et la deuxième tôle.

Selon un mode avantageux de l'invention, le bec comprend des cloisons s'étendant essentiellement axialement entre les première et deuxième tôles de manière à former plusieurs canaux de dégivrage.

L'invention a également pour objet une turbomachine axiale comprenant un bec de séparation, remarquable en ce que le bec de séparation est conforme à l'invention, préférentiellement la turbomachine comprenant un compresseur qui comporte une première rangée annulaire d'aubes statoriques en entrée de compresseur et soutenues par le bec de séparation.

### Avantages apportés

L'invention permet de dégivrer le bec de séparation de manière homogène. Le bord d'attaque reçoit également des calories qui n'ont qu'à traverser l'épaisseur de la tôle annulaire. Cette épaisseur peut être choisie essentiellement fine pour faciliter la conduction thermique. La tôle annulaire présente également une épaisseur constante, ce qui améliore encore l'homogénéité du dégivrage.
Cette solution permet d'employer des éléments déjà certifiés dans une turbomachine. Par conséquent, l'invention permet de limiter le nombre de composants devant être certifiés pour pouvoir être intégrés dans la turbomachine d'un aéronef civil.

### Brève description des dessins

La figure 1 représente une turbomachine axiale selon l'invention.
La figure 2 est un schéma d'un compresseur de turbomachine selon l'invention.
La figure 3 illustre un bec de séparation selon un premier mode de réalisation de l'invention.
La figure 4 est une vue de détail de la portion amont du bec de séparation de la figure 3.
La figure 5 est une vue isométrique du bec de séparation des figures 3 et 4.
La figure 6 illustre un compresseur de turbomachine avec un bec de séparation selon un deuxième mode de réalisation de l'invention.
La figure 7 illustre la portion amont du bec de séparation de la figure 6.
La figure 8 représente une coupe suivant l'axe 8-8 du bec de séparation de la figure 7.

### Description des modes de réalisation

Dans la description qui va suivre, les termes intérieur ou interne et extérieur ou externe renvoient à un positionnement par rapport à l'axe de rotation d'une turbomachine axiale.

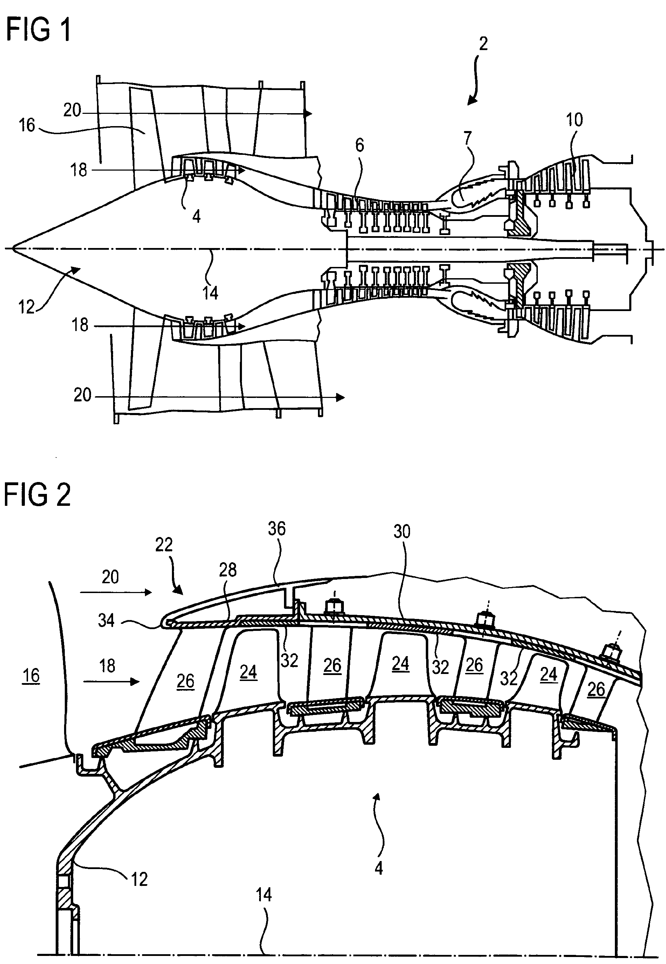

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 7 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 7.

Un ventilateur d'entrée communément désigné fan 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine. A cet effet, le carter présente des parois cylindriques ou viroles qui peuvent être internes et externes en fonction de leur position par rapport à la veine fluide qu'elles délimitent.

La figure 2 est une vue en coupe d'un compresseur d'une turbomachine axiale 2 telle que celle de la figure 1. Le compresseur peut être un compresseur basse pression 4 (figure 1). On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression.

Les aubes statoriques 26 s'étendent essentiellement radialement depuis un carter extérieur, et peuvent y être fixées à l'aide d'un axe. Elles sont régulièrement espacées les unes des autres, et présentent une même orientation angulaire dans le flux. Avantageusement, les aubes d'une même rangée sont identiques. Eventuellement, l'espacement entre les aubes peut varier localement tout comme leur orientation angulaire. Certaines aubes peuvent être différentes du reste des aubes de leur rangée.

Le bec de séparation 22 comprend un bord d'attaque 34 dont le diamètre détermine le flux primaire pouvant entrer dans le compresseur 4. Le bec de séparation 22 comprend également une virole externe 28 qui délimite l'extérieur du flux primaire 18, et une paroi annulaire 36 qui épouse et/ou délimite l'intérieur du flux secondaire 20. Dans le prolongement de la virole externe 28, le bec comprend un carter externe 30 s'étendant axialement le long du compresseur. La virole 28 et le carter externe 30 comprennent des couches annulaires de matériau abradable 32. Elles assurent chacune une étanchéité avec les extrémités des aubes rotoriques 24 avec lesquelles elles coopèrent par abrasion.

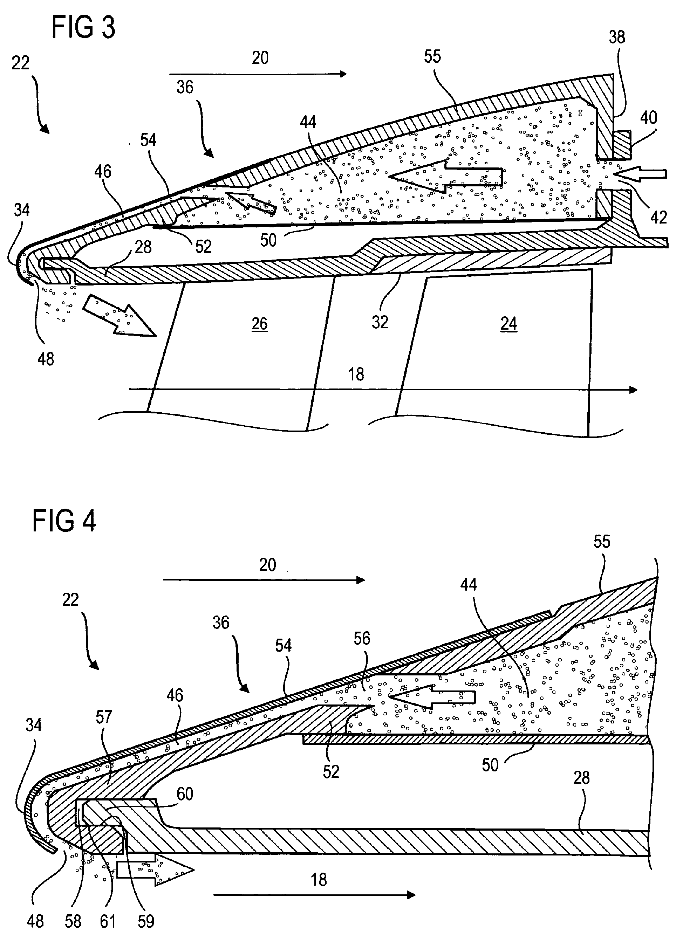

La figure 3 représente un bec de séparation 22 selon un premier mode de réalisation de l'invention.

La paroi annulaire 36 et la virole externe 28 comprennent des brides annulaires 38 et 40 qui s'étendent radialement l'une vers l'autre, elles peuvent se chevaucher axialement et/ou radialement. Ces brides 38 et 40 sont fixées l'une sur l'autre. Les brides 38 et 40 peuvent comprendre des moyens de positionnement et/ou d'orientation. Les brides sont disposées en aval du bord d'attaque 34, du ou des canaux de dégivrage et/ou de la chambre de distribution qui vont être décrits ci-après.

Le bec de séparation 22 comprend un système de dégivrage, apte à prévenir la formation de glace, et/ou à faire fondre de la glace déjà formée. Le système de dégivrage est destiné à véhiculer un fluide chaud de sorte à dégivrer le bec de dégivrage, et éventuellement les surfaces situées en amont telles que celles des aubes statoriques 26. Le fluide chaud peut comprendre des gaz d'échappement provenant de la turbine. Il peut également provenir d'un des compresseurs. Le système de dégivrage comprend l'un après l'autre un conduit d'entrée 42, une chambre de distribution 44, un canal de dégivrage 46, et une sortie 48 qui sont tous en communication.

Le conduit d'entrée 42 est ménagé dans les brides annulaires 38 et 40. Le conduit 42 traverse axialement les deux brides annulaires 38 et 40. La chambre de distribution 44 est avantageusement annulaire. Elle est délimitée axialement par la bride annulaire 38, et radialement par la surface intérieure de la paroi annulaire 36 ainsi que par un voile annulaire 50 rapporté. Le voile annulaire 50 peut être fixé en aval sur la bride annulaire 38, et en amont sur un bourrelet 52 formé sur la paroi annulaire 36. Le voile annulaire 50 permet de séparer, notamment thermiquement, le collecteur 44 de la virole externe 28.

La sortie 48 du canal 46 est disposée axialement au niveau du bord amont de la paroi annulaire 36. Elle est disposée axialement en amont de la virole externe 28, préférentiellement à distance. Elle forme une fente, préférentiellement annulaire et éventuellement segmentée. Elle est orientée vers l'intérieur et/ou vers l'aval.

En amont de la chambre de distribution 44, le canal de dégivrage 46 est délimité entre un support de paroi 55 et une tôle annulaire 54. Le canal 46 s'étend majoritairement axialement. Il peut également s'étendre partiellement radialement en fonction de son inclinaison.

La figure 4 représente de manière plus détaillée la partie amont du bec de séparation 22 de la figure 3.

La tôle annulaire 54 est disposée du côté amont du support de paroi 55. La tôle annulaire 54 s'étend depuis le bord d'attaque 34 vers l'intérieur dans le flux primaire 18, et vers l'extérieur dans le flux secondaire 20.

La tôle annulaire 54 comprend un profil de révolution par rapport à l'axe du bec de séparation 22, cet axe correspondant à l'axe de rotation de la machine. Le profil présente un crochet en amont et une portion sensiblement rectiligne en aval. Le canal de dégivrage 46 communique avec la chambre de distribution 44 via une ouverture ou passage 56 traversant la paroi annulaire 36.

La paroi annulaire 36 comprend un profil de révolution avec un corps de révolution 57. Le canal de dégivrage 46 s'étend à l'interface entre la tôle annulaire 54 et le support de paroi 55. Le canal de dégivrage 46 est formé, préférentiellement localement selon une direction circonférentielle, dans l'épaisseur du corps de révolution 57. L'invention exploite la résistance apportée par le corps de révolution 57 en y intégrant un canal. Ce dernier ne réduit que de manière modérée et localisée la résistance mécanique de la paroi annulaire 36.

Le support de paroi 55 et la virole externe 28 comprennent des moyens de positionnement. Les moyens de positionnement comprennent des moyens de centrage, préférentiellement disposé en amont. Les moyens de centrage de la paroi annulaire 36 et de la virole externe 28 comprennent des surfaces de centrage concentriques qui coopèrent ensemble en vue d'assurer une concentricité entre la paroi annulaire 36 et la virole externe 28.

Le support de paroi 55 comprend une gorge annulaire 58 ouverte axialement vers l'aval. La gorge 58 est formée dans l'épaisseur du corps de support de paroi. La paroi annulaire 36 comprend des premiers moyens de centrage telle une première surface de centrage 59 qui peut être formée dans la gorge annulaire 58. La virole externe 28 comporte une portée tubulaire 60, engagée dans la gorge annulaire 58. La virole externe 28 comporte des moyens de centrage complémentaires, telle une deuxième surface de centrage 61, par exemple formée sur la portée tubulaire 60. La première surface 59 et la deuxième surface 61 sont complémentaires et emmanchées l'une dans l'autre et sont ajustées mécaniquement.

Les surfaces de centrage sont usinées par tournage et préférentiellement rectifiées. Elles peuvent être cylindriques. Les moyens de centrage sont directement en contact pour une plus grande précision. Ils assurent une concentricité inférieure à 0,50 mm au diamètre ; plus préférentiellement inférieure à 0,20 ; plus préférentiellement inférieure à 0,07 mm.

Les moyens de centrage comprennent un jeu axial. Puisque la virole externe 28 et la paroi annulaire 36 sont également fixées en aval, ce jeu axial est nécessaire pour permettre une dilatation différentielle. En effet, elles sont exposées à des températures différentes, et peuvent également être réalisées en des matériaux différents. La virole externe 28 peut être réalisée en aluminium, et la paroi annulaire 36 en titane ou inversement. L'une d'elle peut être en matériau composite.

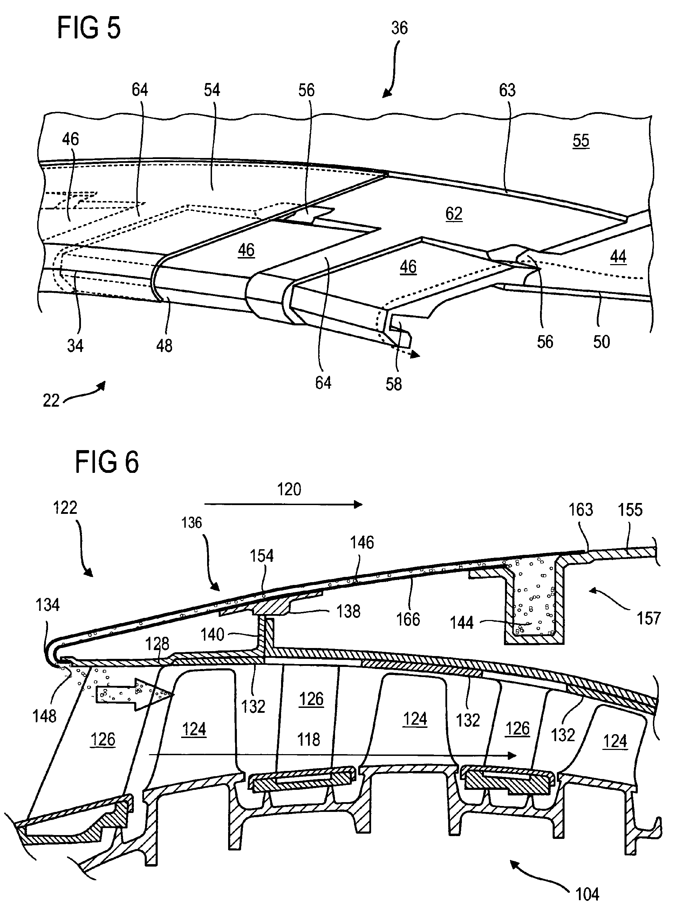

La figure 5 représente une vue isométrique du bec de séparation 22 des figures 3 et 4.

Préférentiellement, le bec de dégivrage comprend plusieurs canaux de dégivrage 46 qui sont répartis sur sa circonférence. La tôle annulaire 54 s'étend axialement en aval des canaux de dégivrage 46 et épouse une zone de fixation 62 annulaire. Celle-ci est formée dans l'épaisseur de la paroi annulaire 36 de sorte à permettre une tangence des surfaces extérieures. La zone de fixation 62 est délimitée axialement par une marche ou ressaut annulaire 63 formé sur la surface de séparation de la paroi annulaire. La hauteur du ressaut 63 permet d'intégrer la tôle annulaire 54 dans l'épaisseur de la paroi annulaire 36.

Les canaux de dégivrage 46 forment des cavités ou bassins, versant vers l'amont. Ils peuvent être usinés dans la masse du support de paroi 55. Les cavités sont formées par des zones de moindre épaisseur du support 55. Les canaux de dégivrage 46 sont séparés les uns des autres par des bandes de cloisonnement 64 formant une continuité de surface avec la zone de fixation 62.

Les canaux de dégivrage 46 sont essentiellement larges. Ils s'étendent sur la majorité de la circonférence du bec de séparation 22, préférentiellement sur plus de 80%. Chaque canal de dégivrage 46 s'étend sur plus de deux aubes consécutives d'un même redresseur, préférentiellement sur plus de cinq aubes consécutives d'un même redresseur. Chaque canal de dégivrage 46 peut être plus large que long axialement.

La figure 6 représente un compresseur comprenant un bec de séparation 122 selon un deuxième mode de réalisation de l'invention. Cette figure 6 reprend la numérotation des figures précédentes pour les éléments identiques ou similaires, la numération étant toutefois incrémentée de 100. Des numéros spécifiques sont utilisés pour les éléments spécifiques à ce mode de réalisation.

La tôle annulaire 154 est une première tôle annulaire 154. La paroi annulaire 136 comprend une deuxième tôle annulaire 166. L'épaisseur de la deuxième tôle 166 est supérieure à l'épaisseur de la première tôle 154, d'au moins 20%, préférentiellement d'au moins 70%, plus préférentiellement d'au moins 200%. La bride annulaire 138 de la paroi annulaire 136 est rapportée sur la deuxième tôle 166 et engage la bride annulaire 140 de la virole externe 128. La bride annulaire 138 comprend un profil de révolution massif, permettant de rigidifier la deuxième tôle 166.

La chambre de distribution 144 est disposée axialement au niveau de la moitié aval du compresseur 104. La chambre de distribution 144 est délimitée par la première tôle 154 et par le support 155 de tôle de la paroi annulaire 136, qui présente une portion avec un profil de révolution rectangulaire. Cette portion présente un prolongement axial sur lequel est fixée la deuxième tôle 166.

Le canal de dégivrage 146 s'étend axialement sur la majorité du compresseur 104. Il s'étend axialement au moins sur la moitié des rangées annulaires d'aubes rotoriques 124 et/ou la moitié des rangées annulaires d'aubes statoriques 126.

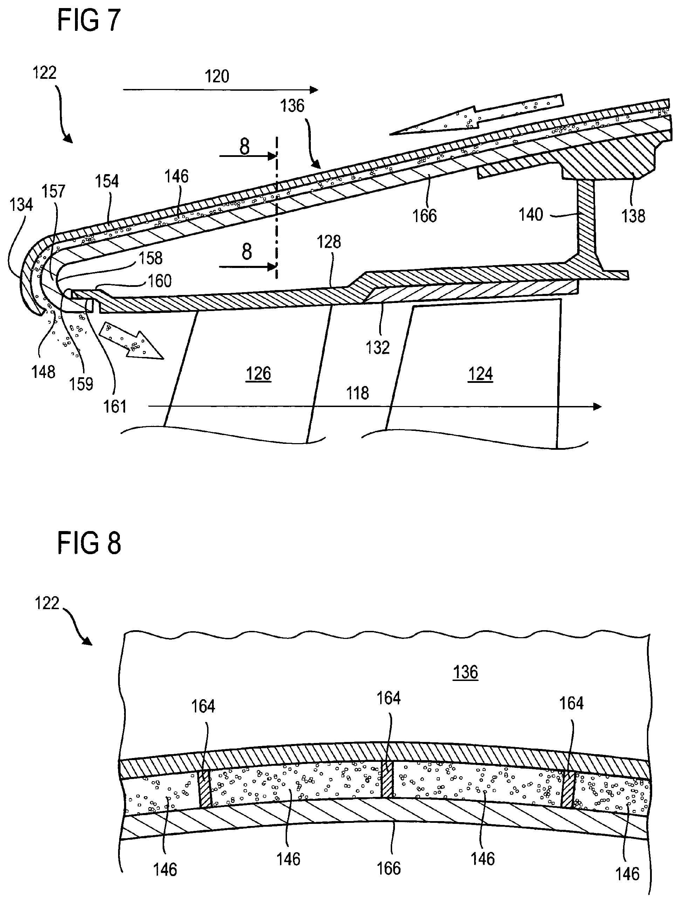

La figure 7 représente la partie amont du bec de séparation 122 selon le deuxième mode de réalisation de l'invention.

La gorge annulaire 158 de la paroi annulaire 136 est formée sur la deuxième tôle 166. Son profil de révolution est essentiellement arrondi et forme un crochet. Cette forme peut être réalisée par déformation de la deuxième tôle 166, ce qui réduit les coûts de fabrication.

Les brides annulaires 138 et 140 coopèrent l'une avec l'autre. Elles peuvent être en contact sur une interface cylindrique. Elles peuvent être fixées l'une à l'autre de sorte à se soutenir mutuellement.

La deuxième tôle 166 et la virole externe 128 comprennent des moyens de centrage. Elles comprennent chacune une surface de centrage, lesdites surfaces de centrages coopèrent ensemble de sorte à assurer un centrage entre la deuxième tôle 166 et la virole externe 128. Les surfaces de centrage peuvent être usinées par tournage, et éventuellement présenter une forme cylindrique.

La figure 8 illustre une coupe suivant l'axe 8-8 tracé sur la figure 7, qui représente les tôles du bec de séparation 122 selon le deuxième mode de réalisation de l'invention

Le bec de séparation 122 comprend des bandes de cloisonnement 164 qui s'étendent radialement. Les bandes de cloisonnement 164 forment des écarteurs permettant de maintenir à distance la première tôle 154 de la deuxième tôle 166. Les bandes de cloisonnement 164 sont rapportées et fixées à la deuxième tôle 166, et éventuellement à la première. Les cloisons axiales 168 sont réparties sur la circonférence de la deuxième tôle 166.

## Revendications

1. Bec de séparation (22 ; 122) d'une turbomachine axiale (2), apte à séparer un flux entrant dans la turbomachine en un flux primaire (18 ; 118) et en un flux secondaire (20 ; 120), et comprenant :
- un bord d'attaque (34 ; 134) généralement circulaire ;
- une paroi annulaire (36 ; 136) s'étendant depuis le bord d'attaque et délimitant le flux secondaire ;
- au moins un canal (46 ; 146) pour un fluide de dégivrage du bec de séparation, s'étendant essentiellement axialement le long de la paroi de manière à déboucher dans le flux primaire ;
**caractérisé en ce que**
la surface extérieure de la paroi (36 ; 136) est formée par une tôle (54 ; 154) délimitant le canal de dégivrage (46 ; 146).

2. Bec de séparation (22 ; 122) selon la revendication 1, **caractérisé en ce que** le ou les canaux (46 ; 146) présentent une épaisseur essentiellement constante sur la majeure partie de son/leur étendue axialement le long de la paroi.

3. Bec de séparation (22 ; 122) selon l'une des revendications 1 à 2, **caractérisé en ce que** la tôle (54 ; 154) est une tôle annulaire ou une pluralité de segments de tôle annulaire, et présente un profil avec une portion aval sensiblement rectiligne et une portion amont coudée qui forme le bord d'attaque (34 ; 134).

4. Bec de séparation (22 ; 122) selon l'une des revendications 1 à 3, **caractérisé en ce que** la paroi annulaire (36 ; 136) comprend un support (55 ; 155) de la tôle (54 ; 154), dont la surface extérieure présente un ressaut (63 ; 163) en vis-à-vis d'un bord aval de la tôle (54 ; 154), de manière à ce que la surface extérieure de la tôle soit alignée avec celle du support au niveau dudit ressaut.

5. Bec de séparation (22 ; 122) selon l'une des revendications 1 à 4, **caractérisé en ce que** la paroi annulaire (36 ; 136) forme au niveau du bord d'attaque un crochet annulaire, préférentiellement avec une gorge annulaire (58; 158) ouverte axialement vers l'aval.

6. Bec de séparation (22 ; 122) selon l'une des revendications 1 à 5, **caractérisé en ce qu'**il comprend une virole externe (28 ; 128) d'un redresseur à aubes (26 ; 126), le bord amont de ladite virole comprenant une surface de centrage annulaire (61 ; 161) coopérant avec une surface de centrage (59; 159) correspondante de la paroi (36; 136), de sorte à assurer une concentricité entre ladite paroi et ladite virole.

7. Bec de séparation (22 ; 122) selon la revendication 6, **caractérisé en ce que** chacune de la virole externe (28; 128) et de la paroi annulaire (36; 136) comprend, en aval des surfaces de centrage (61, 59 ; 161, 159), une bride (38 ; 40 ; 138 ; 140) s'étendant radialement, lesdites brides étant fixées l'une à l'autre et se chevauchant axialement et/ou radialement.

8. Bec de séparation (22) selon l'une des revendications 1 à 7, **caractérisé en ce qu'**il comprend au moins un conduit (42) d'amenée du fluide de dégivrage, en communication avec le canal de dégivrage (46) et préférentiellement traversant les deux brides annulaires (38 ; 40).

9. Bec de séparation (22 ; 122) selon l'une des revendications 1 à 8, **caractérisé en ce qu'**il comprend plusieurs canaux de dégivrage (46 ; 146) qui s'étendent axialement et qui sont répartis le long de la périphérie de la paroi annulaire (36 ; 136).

10. Bec de séparation (22 ; 122) selon la revendication 9, **caractérisé en ce que** les canaux de dégivrage (46 ; 146) sont formés par la tôle (54 ; 154) et un support (55 ; 155) de ladite tôle, préférentiellement le support comprenant sur sa surface extérieure des cavités réparties le long de sa circonférence et correspondants aux canaux.

11. Bec de séparation (22; 122) selon l'une des revendications 9 et 10, **caractérisé en ce qu'**il comprend une chambre de distribution (44 ; 144), préférentiellement annulaire, destinée à distribuer le fluide aux canaux de dégivrage (46 ; 146), la chambre étant préférentiellement reliée aux canaux (46) par des passages (56) au travers du support.

12. Bec de séparation (22 ; 122) selon l'une des revendications 1 à 11, **caractérisé en ce que** le ou chacun des canaux de dégivrage (46 ; 146) comprend une sortie (48 ; 148) en forme de fente annulaire, éventuellement segmentée, orientée radialement vers l'intérieur et axialement vers l'aval.

13. Bec de séparation (122) selon l'une des revendications 1 à 12, **caractérisé en ce que** la tôle est une première tôle annulaire (154), la paroi annulaire (136) comprend une deuxième tôle annulaire (166) qui épouse l'intérieur de la première tôle (154), le canal de dégivrage étant délimité par la première tôle (154) et la deuxième tôle (166).

14. Bec de séparation (122) selon la revendication 13, **caractérisé en ce qu'**il comprend des cloisons (164) s'étendant essentiellement axialement entre les première et deuxième tôles (154, 166) de manière à former plusieurs canaux de dégivrage (146).

15. Turbomachine (2) axiale comprenant un bec de séparation (22; 122), **caractérisée en ce que** le bec de séparation (22 ; 122) est conforme à l'une des revendications 1 à 14, préférentiellement la turbomachine comprenant un compresseur (4 ; 104) qui comporte une première rangée annulaire d'aubes statoriques (26 ; 126) en entrée de compresseur et soutenues par le bec de séparation.

## Patentansprüche

1. Trennkante (22; 122) einer axialen Turbomaschine (2), die in der Lage ist, einen in die Turbomaschine eingehenden Strom in einen Primärstrom (18; 118) und einen Sekundärstrom (20; 120) zu trennen, mit:
- einer Vorderkante (34; 134), die im Allgemeinen rund ist;
- einer ringförmigen Wandung, die sich von der Vorderkante ausgehend erstreckt und den Sekundärstrom begrenzt;
- mindestens einem Kanal (46; 146) für eine Flüssigkeit zum Enteisen der Vorderkante, der sich im Wesentlichen axial entlang der Wandung erstreckt, um im Primärstrom zu münden;
**dadurch gekennzeichnet, dass**
die Außenfläche der Wandung (36; 136) aus einem Blech (54; 154) besteht, das den Enteisungskanal (46; 146) begrenzt;

2. Trennkante (22; 122) gemäß Anspruch 1, **dadurch gekennzeichnet, dass** der Kanal oder die Kanäle (46; 146) im größten Teil seiner/ihrer axialen Ausdehnung entlang der Wandung eine im Wesentlichen konstante Dicke aufweist/aufweisen.

3. Trennkante (22; 122) gemäß einem der Ansprüche 1 bis 2, **dadurch gekennzeichnet, dass** das Blech (54; 154) ein ringförmiges Blech oder eine Mehrzahl von Segmenten von ringförmigen Blechen ist und ein Profil mit einem annähernd geraden hinteren Teil und einem gebogenen vorderen Teil aufweist, der die Vorderkante (34; 134) bildet.

4. Trennkante (22; 122) gemäß einem der Ansprüche 1 bis 3, **dadurch gekennzeichnet, dass** die ringförmige Wandung (36; 136) einen Halter (55; 155) für das Blech (54; 154) beinhaltet, dessen Außenfläche einen Vorsprung (63; 163) aufweist, der einer Hinterkante des Bleches (54; 154) gegenüberliegt, so dass die Außenfläche des Bleches mit derjenigen des Halters im Bereich des genannten Vorsprungs auf einer Linie liegt.

5. Trennkante (22; 122) gemäß einem der Ansprüche 1 bis 4, **dadurch gekennzeichnet, dass** die ringförmige Wandung (36; 136) im Bereich der Vorderkante einen ringförmigen Haken bildet, vorzugsweise mit einer ringförmigen Auskehlung (58; 158), die axial nach hinten geöffnet ist.

6. Trennkante (22; 122) gemäß einem der Ansprüche 1 bis 5, **dadurch gekennzeichnet, dass** sie einen Außenmantel (28; 128) eines Schaufelleitstators (26; 126) beinhaltet, wobei die Vorderkante des genannten Außenmantels eine ringförmige Zentrierfläche (61; 161) beinhaltet, die mit einer Zentrierfläche (59; 159) zusammenwirkt, die der Wandung (36; 136) entspricht, so dass eine Konzentrizität zwischen der genannten Wandung und dem genannten Außenmantel sichergestellt ist.

7. Trennkante (22; 122) gemäß Anspruch 6, **dadurch gekennzeichnet, dass** der Außenmantel (26; 126) und die ringförmige Wandung (36; 136) hinter den Zentrierflächen (61; 59; 161; 159) einen Flansch (38; 40; 138; 140) beinhalten, der sich radial erstreckt, wobei die genannten Flansche miteinander verbunden sind und sich axial und/oder radial überlappen.

8. Trennkante (22; 122) gemäß einem der Ansprüche 1 bis 7, **dadurch gekennzeichnet, dass** sie mindestens eine Zuleitung (42) für die Enteisungsflüssigkeit beinhaltet, die mit dem Enteisungskanal (46) kommuniziert und vorzugsweise die beiden ringförmigen Flansche (38; 40) durchquert.

9. Trennkante (22; 122) gemäß einem der Ansprüche 1 bis 8, **dadurch gekennzeichnet, dass** sie mehrere Enteisungskanäle (46; 146) beinhaltet, die sich axial erstrecken und entlang der Peripherie der ringförmigen Wandung (36; 136) verteilt sind.

10. Trennkante (22; 122) gemäß Anspruch 9, **dadurch gekennzeichnet, dass** die Enteisungskanäle (46; 146) durch das Blech (54; 154) und einen Halter (55; 155) des genannten Bleches gebildet werden, wobei der Halter vorzugsweise auf seiner Außenfläche Vertiefungen aufweist, die entlang seines Umfangs verteilt sind und den Kanälen entsprechen.

11. Trennkante (22; 122) gemäß einem der Ansprüche 9 und 10, **dadurch gekennzeichnet, dass** sie eine Verteilerkammer (44; 144) beinhaltet, die vorzugsweise ringförmig ist und dazu bestimmt ist, um die Flüssigkeit auf die Enteisungskanäle (46; 146) zu verteilen, wobei die Kammer vorzugsweise anhand der Durchgänge (56) durch den Halter mit den Kanälen (46) verbunden ist.

12. Trennkante (22; 122) gemäß einem der Ansprüche 1 bis 11, **dadurch gekennzeichnet, dass** der Enteisungskanal oder jeder der Enteisungskanäle (46; 146) einen Ausgang (48; 148) in Form eines ringförmigen Schlitzes und eventueller Unterteilung in Segmente beinhaltet, der radial nach innen und axial nach hinten ausgerichtet ist.

13. Trennkante (22; 122) gemäß einem der Ansprüche 1 bis 12, **dadurch gekennzeichnet, dass** das Blech ein erstes ringförmiges Blech (154) ist, wobei die ringförmige Wandung (136) ein zweites ringförmiges Blech (166) beinhaltet, das sich an die Innenseite des ersten Bleches (154) anschmiegt, wobei der Enteisungskanal durch das erste Blech (154) und das zweite Blech (166) begrenzt wird.

14. Trennkante (22; 122) gemäß Anspruch 13, **dadurch gekennzeichnet, dass** sie Trennwände (164) beinhaltet, die sich im Wesentlichen axial zwischen dem ersten und dem zweiten Blech (154, 166) erstrecken, um mehrere Enteisungskanäle (146) zu bilden.

15. Axiale Turbomaschine (2) mit einer Trennkante (22; 122), **dadurch gekennzeichnet, dass** die Trennkante (22; 122) einem der Ansprüche 1 bis 14 entspricht, wobei die Turbomaschine vorzugsweise einen Kompressor (4; 104) beinhaltet, der eine erste Reihe von ringförmigen Statorschaufeln (26; 126) am Eingang des Kompressors beinhaltet, die von der Trennkante gestützt werden

## Claims

1. Splitter nose (22, 122) of an axial turbomachine (2) designed to separate a flow entering the turbomachine into a primary flow (18, 118) and a secondary flow (20, 120), and comprising:
- a generally circular leading edge (34, 134);
- an annular wall (36, 136) extending from the leading edge and bounding the secondary flow;
- at least one duct (46, 146) for a de-icing fluid of the splitter nose, extending substantially axially along the wall and opening into the primary flow;
**characterized in that**
the external surface of the wall (36, 136) is formed by a sheet (54, 154) bounding the de-icing duct (46, 146).

2. Splitter nose (22, 122) in accordance with Claim 1, wherein the duct(s) (46, 146) has/have an essentially constant thickness over the major part of its/their length axially along the wall.

3. Splitter nose (22, 122) in accordance with one of Claims 1 to 2, wherein the sheet (54, 154) is an annular sheet or a plurality of segments of annular sheets, and has a profile with a downstream part substantially straight and a curved upstream part which forms the leading edge (34, 134).

4. Splitter nose (22, 122) in accordance with one of Claims 1 to 3, wherein the annular wall (36, 136) comprises a support (55, 155) of the sheet (54, 154), on which the exterior surface has a step (63, 163) facing the downstream edge of the sheet (54, 154), so that the exterior surface of the sheet is level with that of the support at the said step.

5. Splitter nose (22, 122) in accordance with one of Claims 1 to 4, wherein the annular wall (36, 136) forms an annular hook at the leading edge, preferably with an annular groove (58, 158) open axially downstream.

6. Splitter nose (22, 122) in accordance with one of Claims 1 to 5, wherein the nose comprises an external shell (28, 128) of a bladed stator, the upstream edge of the said shell comprising an annular centring surface (61, 161) mating with a corresponding centring surface (59, 159) on the wall designed to ensure concentricity between the said wall (36, 136) and the said shell (28, 128).

7. Splitter nose (22, 122) in accordance with Claim 6, wherein both the external shell (28, 128) and the annular wall (36, 136) comprise, downstream of the centring surfaces (61, 59, 161, 159), a flange (38, 40, 138, 140) extending radially, the said flanges being attached to each other and axially overlapping and/or radially.

8. Splitter nose (22) in accordance with one of Claims 1 to 7, wherein it comprises at least one manifold (42) for supplying de-icing fluid in communication with the de-icing duct (46) and preferably through the two annular flanges (38, 40).

9. Splitter nose (22, 122) in accordance with one of Claims 1 to 8, wherein it comprises several de-icing ducts (46, 146) which extend axially and are distributed along the periphery of the annular wall (36, 136).

10. Splitter nose (22, 122) in accordance with Claim 9, wherein the de-icing ducts (46, 146) are formed by the sheet (54, 154) and a support (55, 155) of the said sheet, the support preferably comprising on its external surface cavities distributed along its circumference and corresponding to the ducts.

11. Splitter nose (22, 122) in accordance one of Claims 9 and 10, wherein it comprises a plenum chamber (44, 144), preferably annular, designed to distribute the de-icing fluid to the ducts (46, 146), the chamber preferably being connected to the ducts (46) by passageways (56) through the support.

12. Splitter nose (22, 122) in accordance with one of Claims 1 to 11, wherein the or each de-icing duct (46, 146) comprises an outlet (48, 148) in the form of an annular gap, optionally segmented, radially inwardly and pointing axially downstream.

13. Splitter nose (122) in accordance with one of Claims 1 to 12, wherein the sheet is a first annular sheet (154), the annular wall (136) comprises a second annular sheet (166) which fits inside the first sheet (154), the de-icing duct being bounded by the first sheet (154) and the second sheet (166).

14. Splitter nose (122) in accordance with Claim 13, wherein it comprises partitioning walls (164) extending substantially axially between the first and second sheets (154, 166) so as to form a plurality of de-icing ducts (146).

15. Axial turbomachine (2) comprising a splitter nose (22, 122) wherein the splitter nose (22, 122) is in accordance with one of Claims 1 to 14, the turbomachine preferably comprising a compressor (4, 104) having a first annular row of stator blades (26, 126) at the compressor inlet and supported by the splitter nose.
